(19) Europäisches Patentamt
European Patent Office
Office européen des brevets

(11) **EP 2 048 454 A2**

(12) **EUROPÄISCHE PATENTANMELDUNG**

(43) Veröffentlichungstag:
**15.04.2009 Patentblatt 2009/16**

(51) Int Cl.:
*F24J 2/42* (2006.01)      *H01L 31/058* (2006.01)
*F24D 11/02* (2006.01)

(21) Anmeldenummer: 08165946.8

(22) Anmeldetag: 06.10.2008

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **10.10.2007 DE 102007048460**

(71) Anmelder: **Deutsches Zentrum für Luft- und Raumfahrt e.V.**
**51147 Köln (DE)**

(72) Erfinder: **Tank, Volker**
**82279, Eching (DE)**

(74) Vertreter: **Selting, Günther**
**Patentanwälte**
**von Kreisler Selting Werner,**
**Bahnhofsvorplatz 1**
**Deichmannhaus am Dom**
**50667 Köln (DE)**

(54) **Vorrichtung zur Gewinnung von Solarenergie**

(57)      Die Vorrichtung zur Gewinnung von Solarenergie weist einen photothermischen PT-Kollektor (12) und einen darunter angeordneten photovoltaischen PV-Kollektor (11) auf. Das den PT-Kollektor (12) durchströmende Wärmeträgermedium enthält eine strahlungsabsorbierende Substanz. Bei drohender Überhitzung des PT-Kollektors wird das Wärmeträgermedium in einen Vorratsbehälter (16) übergeführt, so dass der PT-Kollektor leerläuft und mit Luft gefüllt wird. Durch den PT-Kollektor fällt Solarstrahlung auf den PV-Kollektor (11). Die Vorrichtung eignet sich für großflächige Kollektorsysteme. Sie ermöglicht unterschiedliche Betriebszustände ohne bewegbare Teile zu erfordern.

Fig.1

EP 2 048 454 A2

**Beschreibung**

Die Erfindung betrifft eine Vorrichtung zur Gewinnung von Solarenergie, mit einem Solarenergie aufnehmenden und an ein Wärmeträgermedium übertragenden Photothermie-Kollektor und einem Wärmetauscher, der über einen Kreislauf mit dem Photothermie-Kollektor verbunden ist.

Solare Kollektorsysteme zur Warmwasserbereitung (Photothermie, PT) für den Wohnhausbereich verfügen in aller Regel über relativ geringe Kollektorflächen, um das Problem der Stagnation (Überhitzung in sonnenscheinreicher Jahreszeit) zu vermeiden. In der sonnenscheinarmen Jahreszeit ist ihre Ausbeute deshalb so gering und kann keinen signifikanten Beitrag z. B. zur Wohnraumheizung liefern. Dieses Problem besteht bei solaren Kollektorsystemen zur Stromerzeugung (Photovoltaik, PV) nicht, weshalb sie in dachüberdeckenden Flächen installiert werden. Bezogen auf die solare Einstrahlung haben PT-Anlagen einen Wirkungsgrad von mehr als 80 %, PV-Anlagen von maximal 14 %. Es ist daher anzustreben, PT-Anlagen zur Heizung im Wohnhausbereich zu nutzen, was aber bisher durch das Problem der Stagnation und der daraus resultierenden Beschränkung auf kleine Kollektorflächen verhindert wird. Eine Lösung des Problems wurde in der jüngeren Vergangenheit mittels sehr großer, thermisch isolierter Wasserspeicher (mit Hunderten von Kubikmetern Volumen) versucht, in denen die in der sonnenscheinreichen Jahreszeit gesammelte Wärmemenge gespeichert wird und Monate später in der Heizperiode nach und nach daraus entnommen wird.

Zur Steigerung des Wirkungsgrads von Anlagen zur technischen Nutzung von Sonnenenergie durch photovoltaische Anlagen zur Stromerzeugung (PV) und/ oder photothermische Anlagen zur Erzeugung von Warmwasser (PT), z. B. auf Gebäudedächern oder an Gebäudefassaden, sind Verfahren bekannt, duale Solar-Systeme zu verwenden, die aus einer Kombination von PV-Segmenten und PT-Segmenten bestehen. PV-und PT-Anlage werden dabei nebeneinander und unabhängig voneinander betrieben.

Darüber hinaus gibt es auch Verfahren zur Optimierung des Nutzungsgrads dualer Solarsysteme und zur Vermeidung von Stagnation (Stillstand und Überhitzung durch Überangebot an Strahlungsenergie) des PT-Segments in Form stufenlos geregelter Abschattung der PT-Segmente durch die ihnen überlagerten PV-Segmente (z. B. in Form beweglicher Lamellen). In derartigen Systemen sind PV- und PT-Betrieb direkt miteinander gekoppelt. Sie haben den Vorteil, dass die gesamte Dachfläche zur PV und/oder PT genutzt werden kann, PV und PT stufenlos kombiniert werden können und Stagnation sicher vermieden werden kann, wozu eine bedarfs- und vorhersagebasierte Steuerung vorgesehen ist (Deutsche Patentanmeldung DE 10 2006 042 888 A1).

Es sind auch sogenannte gekühlte Photovoltaik-Anlagen bekannt, die sowohl elektrische als auch thermische Energie gewinnen. Ihre Aufgabe ist aber primär, den Wirkungsgrad von PV-Kollektoren durch Kühlung zu steigern, nicht jedoch Stagnation von PT-Anlagen zu verhindern.

Als nachteilig am Stand der Technik wird angesehen, dass wegen des nicht zufriedenstellend bzw. ungelösten Problems der Stagnation bei PT-Anlagen gegenwärtig eine Beschränkung auf kleine Kollektorflächen erfolgt (mit Ausnahme einiger experimenteller Großanlagen mit sehr großen Warmwasserspeichern), weshalb eine effiziente Nutzung solarer Energie mittels großflächiger PT-Systeme für die Heizung von Wohngebäuden z. Zt. nicht möglich ist.

Als nachteilig am Stand der Technik wird ferner angesehen, dass eine Art von Kombisystemen PV und PT nebeneinander betreiben, und starr nur jeweils einen Teil der zur Verfügung stehenden Dachfläche und Solarenergie nutzt und daher weder optimal, noch flexibel ist und Stagnation nicht flexibel vermeiden kann.

Ebenso wird die gekühlte Photovoltaik-Technik nicht als optimale Lösung gesehen, da bei dieser Technik der PT-Betrieb nicht steuerbar ist und primär zur Steigerung des Wirkungsgrads der PV-Anlage dient.

Eine andere Art von Kombisystemen ermöglicht gleichzeitig dachflächenüberdeckende PV und PT und stufenlose Strahlungsaufteilung zwischen beiden, verhindert sicher Stagnation, hat aber den Nachteil, dass bewegte Teile (Lamellen) im Freien (Kollektorbereich) verwendet werden müssen. Für geforderte Betriebsdauer der Systeme von 20 bis 30 Jahren sind bewegte Anlagenteile im Freien nur mit großem Aufwand zu realisieren.

Gegenwärtige Systeme erlauben daher nicht in gewünschter Weise die Einrichtung und den Betrieb großflächiger PT-Anlagen auf Hausdächern für Heizzwecke und die Nutzung des hohen Wirkungsgrads der PT.

Es wird auch als Nachteil angesehen, dass gegenwärtige PT-Systeme große Mengen teurer Metalle (z. B. Kupfer) verwenden und dass ihre Herstellung, insbesondere die Beschichtung der Oberflächen mit hochabsorbierenden Materialien, sehr aufwendig ist.

Der Oberbegriff des Patentanspruchs 1 geht aus von einer Vorrichtung zur Gewinnung von Solarenergie nach EP 1 798 497 A2. Diese Vorrichtung enthält einen Photothermie-Kollektor, der mit einem Behälter verbunden ist, welcher eine wärmeabsorbierende Flüssigkeit enthält, die durch den Kollektor gepumpt werden kann, um Wärme von dem Kollektor zu einem Wärmetauscher zu übertragen. Wenn nicht genügend Solarstrahlung zur Verfügung steht oder im Falle einer Störung, hält die Pumpe an, so dass die Flüssigkeit aus dem Kollektor in den Behälter zurückläuft. Der Kollektor wird dann leer, wodurch einerseits ein Gefrieren der Flüssigkeit bei niedrigen Außentemperaturen verhindert und andererseits eine Überhitzung bei exzessiver Wärmestrahlung vermieden wird.

Aufgabe der Erfindung ist daher die Schaffung einer Vorrichtung, mit der die Stagnation von PT-Anlagen vermieden wird und dadurch deren Nutzung in großflächigen Kollektorsystemen für alle Anwendungen, z. B. auch im Wohnhausbereich zu Heizzwecken, vor allem in der sonnenscheinarmen Jahreszeit, möglich ist.

Aufgabe ist darüber hinaus die Schaffung von Verfahren und Vorrichtungen zum Betrieb dualer geregelter Anlagen zur optimalen Nutzung von Sonnenenergie mittels PV- und PT-Solarkollektoren auf Gebäudedächern oder an Gebäudefassaden in Anlehnung an DE 10 2006 042 888 A1, jedoch ohne bewegte Komponenten im Kollektorbereich (Aussenbereich) und ohne die anderen genannten Nachteile. Insbesondere besteht die Aufgabe auch darin, alternativ PV oder PT zu betreiben, wobei die Priorität auf einem PT-Betrieb mit großer Leistung (Kollektorfläche) für Heizzwecke liegt.

Die erfindungsgemäße Vorrichtung zur Gewinnung von Solarenergie ist durch den Patentanspruch 1 definiert. Sie weist einen Solarenergie aufnehmenden und an ein Wärmeträgermedium übertragenden PT-Kollektor und einen Wärmetauscher, der über einen Kreislauf mit dem PT-Kollektor verbunden ist, auf. Die Vorrichtung ist dadurch gekennzeichnet, dass der Kreislauf einen Vorratsbehälter für das eine strahlungsabsorbierenden Substanz enthaltende Wärmeträgermedium aufweist, und dass Mittel vorgesehen ist, um in einem ersten Betriebszustand das Wärmeträgermedium durch den Kreislauf zu pumpen und in einem zweiten Betriebszustand das Wärmeträgermedium aus dem PT-Kollektor in den Vorratsbehälter zu überführen und den PT-Kollektor mit Luft zu füllen.

Es wird ein PT-Kollektor verwendet, der als strahlungsdurchlässiges Röhrensystem (PT-Röhren, z. B. aus Glas, gegebenenfalls auch in Form vakuumisolierter Doppelrohrsysteme) ausgebildet ist, das mit einem Wärmetauscher in einem Warmwasserspeicher und einem entsprechenden Rohrleitungssystem ein Kreislaufsystem bildet. Zur Optimierung des Wirkungsgrads können die PT-Röhren sonnenseitig mit Antireflexionsbeschichtungen versehen werden.

Im PT-Betrieb sind die PT-Röhren von einer strahlungsabsorbierenden Flüssigkeit (Absorberflüssigkeit) durchströmt, welche die Sonnenstrahlung vollständig oder nahezu vollständig absorbiert und in Wärmeenergie umwandelt. Die Absorberflüssigkeit erwärmt sich dabei. Die erwärmte Absorberflüssigkeit wird über den Anlagenkreislauf durch den Wärmetauscher im Speicherbehälter (z. B. Wasserspeicher) gepumpt, wo die Wärme an das Speichermedium abgegeben wird.

Bei drohender Stagnation wird zu deren Vermeidung die Absorberflüssigkeit aus dem System der PT-Röhren automatisch in ein Vorratsgefäß entleert und die PT-Röhren werden mit Luft gefüllt, wodurch sie die Eigenschaft der Strahlungsabsorption verlieren (Betriebsweise "Leerlauf"). Sie sind weitestgehend strahlungsdurchlässig, weshalb die Sonnenstrahlung sie (nahezu) ungehindert durchstrahlt und z. B. auf das darunter liegende Dach fällt. Es wird keine Solarstrahlung in nutzbare Wärmeenergie gewandelt.

Die darunter liegende Dachfläche kann im sichtbaren und infraroten Spektralbereich reflektierend ausgebildet sein, so dass Strahlung, die hier auftritt, wieder zum Kollektorröhrensystem zurück reflektiert wird.

Der Wechsel zwischen Leerlauf- und PT-Betrieb erfolgt bedarfs- und vorhersagegesteuert, indem für den PT-Betrieb die PT-Röhren über gesteuerte Ventile und/oder Pumpen von einem Vorratsbehälter mit Absorberflüssigkeit gefüllt werden, oder für den PV-Betrieb die Absorberflüssigkeit aus den PT-Röhren in den Vorratsbehälter entleert wird.

Die Absorberflüssigkeit verfügt über eine hohe Kohäsion, es handelt sich also um eine gering benetzende Flüssigkeit.

Die Innenwände der PT-Röhren sind durch Struktur, Material und gegebenenfalls Beschichtung so gestaltet, dass sie eine geringe Adhäsion gegenüber der Absorberflüssigkeit aufweisen. Die Kohäsion der Flüssigkeit ist größer als die Adhäsion zwischen Innenwänden und Absorberflüssigkeit. Damit wird erreicht, dass die Innenwände von der Absorberflüssigkeit nicht benetzt werden (Lotuseffekt) und Absorberflüssigkeit beim Entleeren rückstandsfrei abperlt, die Röhren also vollständig durchlässig für Sonnenstrahlung werden. Beispielsweise können hier Vorrichtungen/Verfahren nach DE 199 13 601 C1 zur Anwendung kommen.

Die Innenwände der PT-Röhren können für den PV-Betrieb von Rückständen der Absorberflüssigkeit mittels eines automatischen Reinigungssystems befreit werden, welches aus Rohrmelkanlagen der Milchwirtschaft bekannt, erprobt und ausgereift ist.

Es kann alternativ vollständig auf vorstehend genannte Maßnahmen zur Vermeidung von Rückständen der Absorberflüssigkeit an den Wänden des Röhrensystems, oder deren Reinigung für den Leerlaufbetrieb verzichtet werden, solange die Rückstandsbildung geringfügig ist. Geringe Rückstände werden in Kauf genommen und bei der Wiederbefüllung des Systems mit der Absorberflüssigkeit von dieser gelöst.

Die Absorberflüssigkeit besteht aus dem eigentlichen Absorbermaterial und einem geeigneten Trägerfluid (Trägerflüssigkeit). Das Absorbermaterial hat einen hohen Strahlungsabsorptionsgrad im sichtbaren und nahen infraroten Bereich des solaren Spektrums. Trägerfluid und Absorbermaterial können so miteinander kombiniert werden, dass eine Absorberflüssigkeit entsteht, in der das Fluid den Transport des Absorbermaterials bewirkt, das Absorbermaterial die solare Strahlung absorbiert, sich dabei erwärmt und die Wärme an das Fluid überträgt. Im Kreislauf überträgt dann im Wärmetauscher das Fluid die Wärme an das Medium im Speicherbehälter (in der Regel Wasser). Fluid und Absorbermaterial sind daher entweder ineinander löslich, oder bilden eine stabile Suspension, oder aber gehen eine chemische Verbindung ein. In jedem Fall hat das entstehende System (die Absorberflüssigkeit) einen hohen Strahlungsabsorptionsgrad im sichtbaren und infraroten Spektralbereich, eine chemische Stabilität und eine ausreichende Temperaturbeständigkeit, wodurch ein langjähriger Betrieb ohne Verminderung des Wirkungsgrads möglich ist.

Als Fluid kann Wasser, Alkohol, Wasser mit Frostschutzmittelzusatz, o. ä. verwendet werden. Als Absorbermaterial werden beispielsweise Schwarzpigmente verwendet wie sie aus verschiedenen Gebieten der Technik, der Farbherstellung, der Beschichtungstechnik und auch der künstlerischen Malerei bekannt sind. Dazu gehören in erster Linie Industrieruß (Lampenruß, "thermal carbon black", ein Ruß mit höchster Partikelgröße bei gleichzeitig geringer Partikelaggregation, "furnace black", ein Ruß mit einem in weiten Bereich einstellbaren Partikelspektrum hinsichtlich Größenverteilung, Aggregation und Agglomeration), verschiedene Metalloxide, z. B. Schwarzchrom, aber auch Knochen- und Eifenbeinschwarz.

Es können Flüssigkeiten mit gelösten (löslichen) schwarzen Farbstoffen oder lösungsmittelbasierten Farbstoffen verwendet werden, z. B. Tinten. Priorität bei der Auswahl der Absorberflüssigkeit hat die Temperaturbeständigkeit und Langlebigkeit der Absorbereigenschaften.

In einer weiteren Ausführungsform wird ein duales PV/PT-Solarkollektorsystem in zwei übereinander liegenden Ebenen verwendet.

In der unteren Ebene wird der PV-Kollektor angeordnet, in der darüber liegenden Ebene (näher zur Sonne) ein PT-Kollektor.

Zwischen beiden Kollektoren befindet sich ein ausreichender Abstand zur Gewährleistung der Kühlung (mittels Luftzirkulation) des PV-Kollektors.

Der PT-Kollektor ist als strahlungsdurchlässiges Röhrensystem (PT-Röhren) ausgebildet (z. B. aus Glas), das mit einem Wärmetauscher in einem Warmwasserspeicher und einem entsprechenden Rohrleitungssystem ein Kreislaufsystem bilden.

Im PV-Betrieb sind die PT-Röhren mit Luft gefüllt und daher strahlungsdurchlässig, weshalb die Sonnenstrahlung sie (nahezu) ungehindert durchstrahlt und auf die darunter liegenden PV-Kollektoren trifft, wo sie in elektrische Energie gewandelt wird. Es wird dabei keine Solarstrahlung in nutzbare Wärmeenergie gewandelt.

Im PT-Betrieb sind die PT-Röhren von einer strahlungsabsorbierenden Flüssigkeit (Absorberflüssigkeit) durchströmt, welche die Sonnenstrahlung vollständig oder nahezu vollständig absorbiert und in Wärmeenergie umwandelt. Die Absorberflüssigkeit erwärmt sich dabei. Die erwärmte Absorberflüssigkeit wird über den Anlagenkreislauf durch den Wärmetauscher im Speicherbehälter (z. B. Wasserspeicher) gepumpt, wo die Wärme an das Speichermedium abgegeben wird. Es fällt keine Sonnenstrahlung auf die untere Ebene des Systems mit den PV-Kollektoren, weshalb keine Wandlung in elektrische Energie stattfindet.

Die Erfindung erlaubt also die Realisierung von flexibel steuerbaren PT/PV-Kombianlagen ohne mechanisch bewegte Elemente/Komponenten im Außenbereich, vermiedet sicher Stagnation und steigert den Wirkungsgrad der Solarstrahlungsnutzung. Im PT-Kollektorbereich werden keine teuren Metalle (wie Kupfer) und keine teuren, hochabsorbierenden Beschichtung benötigt.

Ein Ausführungsbeispiel der Erfindung wird anhand der Zeichnungen näher erläutert.

Es zeigen:

Fig. 1 eine schematische Darstellung einer kombinierten PT/PV-Solarenergieanlage im PT-Betrieb, und

Fig. 2 eine schematische Darstellung einer PT/PV-Kollektoranordnung im PV-Betrieb

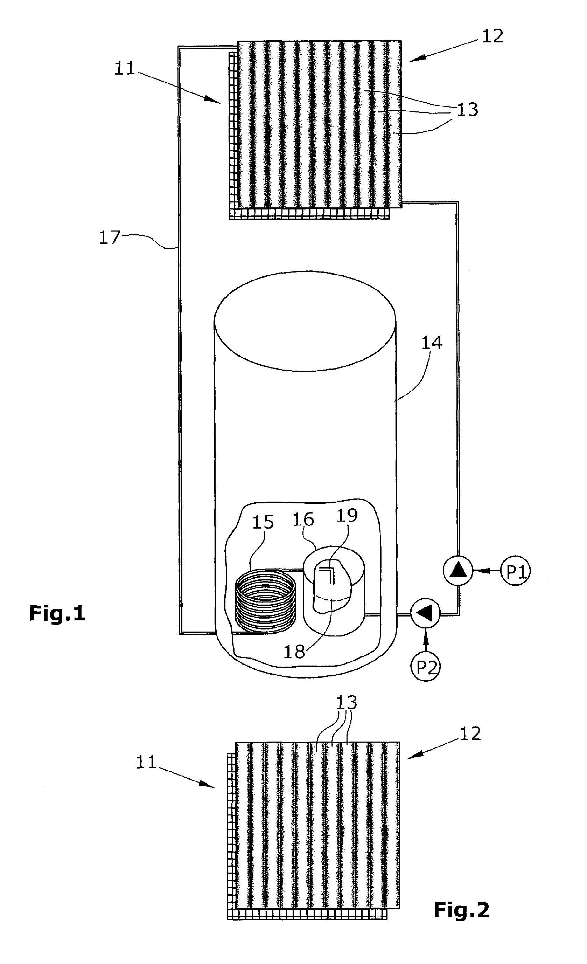

In den Zeichnungen sind nur die wesentlichen Bestandteile der Anlage dargestellt, bewusst ist auf die Wiedergabe sonstiger Rohrleitungen, Ventile, elektrischer Leitungen, Messfühler, Steuerelemente, Steuerrechner, etc. verzichtet worden. Im oberen Teil der Abbildung befinden sich in angedeuteter Perspektive die beiden Kollektoren, der PV-Kollektor 11 in der unteren Ebene (das Gittermuster symbolisiert PV-Solarzellen), der PT-Kollektor 12 in der oberen Ebene (symbolisiert durch vertikal angeordnete Röhren 13). Die Schattierung der Röhren 13 des PT-Kollektors symbolisiert, dass die Röhren mit Absorberflüssigkeit gefüllt sind, die Anlage sich also im PT-Betrieb befindet. Dargestellt sind ferner der Speicherbehälter 14 für das zu erwärmende Wasser (Brauchwasser, Heizung), und in diesem der Wärmetauscher 15 (in Form eines Spiralrohrs), der Vorratsbehälter 16 für die Absorberflüssigkeit. Ferner enthält die Figur 1 die Rohrleitungen für den Kreislauf der Absorberflüssigkeit zwischen PT-Kollektor 12, Wärmetauscher 15 und Vorratsbehälter 16 für die Absorberflüssigkeit. Die Pumpen P1 und P2 fördern die Absorberflüssigkeit in diesem Kreislauf, dessen Funktionsweise in Figur 1 nur schematisch dargestellt ist und nachfolgend erläutert wird. In der technischen Realisierung werden gegebenenfalls zusätzliche Ventile und Rohrleitungen verwendet, um die nachstehend dargestellte Funktionsweise der beiden Betriebsarten PV oder PT zu erreichen.

Im dargestellten PT-Betrieb ist die Pumpe P2 auf Durchlauf geschaltet, sie pumpt nicht und lässt die Absorberflüssigkeit durchströmen. Es läuft die Pumpe P1 und fördert die Absorberflüssigkeit aus dem Vorratsbehälter 16 zum Kollektor 12, durch dessen Rohrsystem hindurch, zum Wärmetauscher 15, durch diesen hindurch und in den Vorratsbehälter 16 für die Absorberflüssigkeit. Im Vorratsbehälter ist in diesem Betriebszustand nur so viel Absorberflüssigkeit, dass die Zuleitung zur Pumpe P1 sich immer in der Flüssigkeit befindet. Diese Zuleitung befindet sich nahe am Boden des Vorratsbehälters. Die Ableitung vom Wärmetauscher in den Vorratsbehälter befindet sich im oberen Bereich des Vorratsbehälters und ragt in keinem der Betriebszustände mit dem Ableitungsrohr 19 in die Absorberflüssigkeit hinein, deren Flüssigkeitsstand durch die gestrichelte Linie 18 angegeben ist. Zur Umschaltung der Anlage von den PTin den PV-Betrieb wird die Pumpe P1 auf Durchlauf geschaltet, sie pumpt nicht und lässt die Absorberflüssigkeit durchströmen. Es läuft die Pumpe P2 und fördert die Absorberflüssigkeit aus dem PT-Kollektor 12 in den Vorratsbehälter 16. Dieser füllt sich dabei, während sich der PT-Kollektor entleert. Bei der Fließrichtung, die durch Pumpe P2 bewirkt wird, wird der Kreislauf 17 der Absorberflüssigkeit dadurch unterbrochen und verhindert, dass das Ableitungsrohr 19 vom Wärmetauscher in den Vorratsbehälter auch bei vollständig entleertem Kollektor in die Absorberflüssigkeit ragt. Ist der PT-Kollektor vollkommen entleert, wird die Pumpe P2 abgeschaltet (P1 und P2 sind jetzt abgeschaltet), der PT-Kollektor ist außer Betrieb und strahlungsdurchlässig , der PV-Kollektor 11 empfängt Sonnenstrahlung und die Anlage nimmt den PV-Betrieb auf.

Fig. 2 stellt in angedeuteter Perspektive die beiden Kollektoren 11, 12 bei PV-Betrieb dar. Die hier fehlende Schattierung der Röhren des PT-Kollektors 12 symbolisiert, dass die Röhren 13 nicht mit Absorberflüssigkeit gefüllt sind, die Anlage sich also im PV-Betrieb befindet.

Zum Übergang vom PV- in den PT-Betrieb wird die Pumpe P1 eingeschaltet, wodurch das PT-Röhrensystem mit Absorberflüssigkeit gefüllt wird und der Kreislauf der Flüssigkeit beginnt.

Es ist vorgesehen, die Anlage mit Verfahren zu steuern, wie sie beispielsweise in DE 10 2006 042 888 A1 beschrieben sind. Die dazu nötigen Anlagenteile wie Messfühler, Steuerrechner, etc. sind technisch bekannt und Bestandteil der Anlage, hier aber nicht weiter beschrieben.

Andere Verfahren zum Füllen und Entleeren des PT-Kollektorröhrensystems können ebenfalls zur Anwendung kommen.

Eine weitere (nicht dargestellte) Ausführungsform verfügt zusätzlich zur vorstehend beschriebenen, dachüberdeckenden PT-PV-Kombianlage über eine kleinflächige reine PT-Kollektoranlage, die primär der Erzeugung von Warmwasser für Brauchzwecke in der sonnenscheinreichen Jahreszeit dient. in dieser Zeit kann dann die PT-PV-Kombianlage durchgehend im PV-Betrieb betrieben werden. Erst zu Beginn der Heizperiode geht dann die PT-PV-Kombianlage in den Kombibetrieb. Dadurch wird die notwendige Zahl der Wechsel zwischen PT- und PV-Betrieb drastisch reduziert (wäre sehr häufig im Sommer, wenn nur Warmwasser für Brauchzwecke und nicht zum Heizen benötigt wird) und damit gegebenenfalls der Reinigungsaufwand der PT-Röhren gering gehalten.

Zur Optimierung der Sonnenenergienutzung ist es zweckmäßig, die verfügbare bzw. die vom Kollektorsystem zu überbauende Fläche vollständig zur Strahlungssammlung zu nutzen. Dazu wird die PV-Kollektoreinheit der unteren Ebene in technisch bekannter Weise so gestaltet, dass sie die gesamte verfügbare Fläche überdeckt. Das in der Ebene darüber angeordnete PT-Röhrensystem wird so gestaltet, dass es eine geschlossene, absorbierende Fläche bildet, die die PV-Kollektoreinheit vollständig überdeckt. In idealisierter Betrachtung (der die technische Realisierung möglichst nahe kommen soll) ist es kein eigentliches Röhrensystem, sondern wird es durch zwei planparallele Glasplatten (ähnlich einer Isolierglasfensterscheibe) gebildet, mit einem Einlass für die Absorberflüssigkeit an einer Kante und einem Auslass an der gegenüberliegenden Kante. Die Flüssigkeit tritt, vom Wärmetauscher kommend, über den Einlass zwischen die Glasplatten, durchströmt die Anordnung Richtung Auslass, erwärmt sich dabei und fließt über den Auslass zurück zum Wärmetauscher. Der Abstand der Platten und damit die Schichtdicke der Absorberflüssigkeit ist unter Anwendung des Gesetzes zur Strahlungsabsorption von Lambert Beer so gewählt, dass die einfallende Strahlung von der Absorberflüssigkeit vollständig absorbiert wird. Alle Innenseiten des Glasplattensystems, die mit der Absorberflüssigkeit in Berührung kommen, sind mit einer Oberflächengestaltung, Oberflächenstrukturierung oder einer Oberflächenbeschichtung vorgesehen, die eine Benetzung durch die Absorberflüssigkeit und ihre Bestandteile verhindert (Lotuseffekt).

Das Gesetz von Lambert Beer

$$\tau(\lambda) = \frac{P_s(\lambda)}{P_0(\lambda)} = e^{-\alpha(\lambda)cs}$$

gibt den Strahlungstransmissionsgrad $\tau$ eines durchstrahlten Mediums als Funktion der Wellenlänge $\lambda$ an, als Quotient der spektralen Strahlungsleistung $P_s(\lambda)$ am Ende einer Strahlungsübertragungsstrecke der Länge s bezogen auf die spektrale Strahlungsleistung $P_0(\lambda)$ am Anfang der Strahlungsübertragungsstrecke. Der spektrale Transmissionsgrad $\tau(\lambda)$ ist außer von der Wellenlänge s vom spektralen Extinktionskoeffizienten $\alpha(\lambda)$ des Mediums und von seiner Konzentration c abhängig.

Der Strahlungstransmissionsgrad der Absorberflüssigkeit soll $\tau(\lambda) = 0$ sein, d. h. die Extinktion $\alpha(\lambda)$ cs soll möglichst groß werden. Da die Länge s der Strahlungsübertragungsstrecke ("Schichtdicke" der Absorberflüssigkeit) nicht zu groß werden soll (im Bereich von einigen Millimetern, etwa 1 bis 2 cm), muss $\alpha(\lambda)c$ groß sein, was durch die genannten Materialien in hoher Konzentration erreicht wird. Die Absorberflüssigkeit muss einen tiefschwarzen Anblick bieten (wie schwarze Tinte). Die optimale Konzentration bzw. das optimale Mischungsverhältnis von Trägerflüssigkeit und Absorbermedium wird in technisch bekannter Weise z. B. mittels Absorptionsmessungen mit Infrarotspektrometern bestimmt.

Die Absorberflüssigkeit wird keimfrei gemacht, so dass sich keine Algen, Pilze o. ä. in ihr entwickeln können.

Es ist vorgesehen, an geeigneter Stelle im System, vorzugsweise im Vorratsbehälter für die Absorberflüssigkeit, eine Rührvorrichtung zu verwenden, die eine verwendete Suspension von Schwarzpigmenten und Fluid in Mischung hält, also ein Absetzen/Ausfällen der Schwarzpigmente verhindert.

In einer bevorzugten Ausführungsform der vorstehend idealisierten Vorrichtung werden parallel nebeneinander verlaufende, strahlungsdurchlässige Absorberröhren möglichst dünner Wandstärken mit kreisförmigem Querschnitt verwendet. Diese werden in zwei aufeinanderliegenden, gegeneinander um eine halbe Röhrenbreite versetzte, Lagen von Röhren gefertigt. Durch diese Anordnung entsteht eine virtuelle Schicht von Absorberflüssigkeit (wenn sie das System durchströmt), mit überall nahezu gleicher Schichtdicke, wodurch die auf der gesamten Fläche gewünschte gleichmäßige Strahlungsabsorption erreicht wird. Der Durchmesser der Röhren und damit die integrale Schichtdicke der Absorberflüssigkeit ist unter Anwendung des Gesetztes von Lambert Beer so gewählt, dass die einfallende Strahlung von der Absorberflüssigkeit vollständig absorbiert wird.

In einer einfacheren Ausführungsform wird die vorstehend beschriebene Anordnung mit nur einer Schicht Röhren gefertigt, mit der Folge, dass ständig ein Teil der einfallenden Strahlung die untere PV-Kollektorebene erreicht und in elektrische Energie gewandelt wird.

Alternativ werden parallel nebeneinander verlaufende, strahlungsdurchlässige Absorberröhren möglichst dünner Wandstärken mit rechteckigem oder quadratischem Querschnitt verwendet. Dazu können auch sogenannte "Stegplatten" verwendet werden, die aus planparallelen Platten bestehen, welche mit parallel zwischen den Platten verlaufenden Stegen verbunden und auf gleichem Abstand gehalten sind.

Auch hier können zwei übereinander und gegeneinander versetzt angeordnete Rohrsysteme (Stegplatten) verwendet werden, wodurch die Strahlung, die die Stege der oberen Sicht durchdringt, in dem darunter angeordneten Absorberrohr absorbiert wird. Zur Anwendung kommen dann z. B. so genannte "Doppelstegplatten".

Alternativ werden Systeme von Absorberröhren unter Verwendung anderer Rohrquerschnitte wie z. B. dreieckiger oder trapezförmiger oder einfacher Fachwerke (Fachwerkplatten) verwendet.

**Patentansprüche**

1. Vorrichtung zur Gewinnung von Solarenergie, mit einem Solarenergie aufnehmenden und an ein Wärmeträgermedium übertragenden Phototermie-Kollektor (12) und einem Wärmetauscher (15), der über einen Kreislauf (17) mit dem PT-Kollektor verbunden ist, wobei der Kreislauf (17) einen Vorratsbehälter (16) für das eine strahlungsabsorbierende Substanz enthaltende Wärmeträgermedium aufweist und Mittel (P1, P2) vorgesehen sind, um in einem ersten Betriebszustand das Wärmeträgermedium durch den Kreislauf (17) zu pumpen und in einem zweiten Betriebszustand das Wärmeträgermedium aus dem PT-Kollektor (12) in den Vorratsbehälter (16) zu überführen und den PT-Kollektor mit Luft zu füllen, **dadurch gekennzeichnet,** **dass** unter dem PT-Kollektor ein Photovoltaik-Kollektor mit photovoltaischer Energieumsetzung angeordnet ist, der in dem zweiten Betriebszustand durch den PT-Kollektor hindurch Solarenergie aufnimmt.

2. Vorrichtung nach Anspruch 1, **gekennzeichnet durch** eine Einrichtung zur Erkennung drohender Überhitzung am PT-Kollektor und zur Umschaltung von dem ersten auf den zweiten Betriebszustand bei drohender Überhitzung.

**Fig.1**

**Fig.2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006042888 A1
- EP 1798497 A2
- DE 19913601 C1